# EUROPEAN PATENT APPLICATION

(11) **EP 2 149 994 A1**
(43) Date of publication of application: **03.02.2010**
(21) Application number: 08104898.5
(22) Date of filing: 28.07.2008
(51) Int. Cl.: H04B 7/26

(54) **Module and method for operating said module**

(71) Applicant: Nokia Siemens Networks OY, 02610 Espoo (FI)
(72) Inventor: Kretschmer, Uwe, 47877, Willich (DE); Rudert, Matthias, 40882, Ratingen (DE); Siekmeyer, Rolf, 40489, Düsseldorf (DE)
(74) Representative: Bruglachner, Thomas E.

(57) **Abstract**

A module is provided comprising an active outdoor module, an interface to an antenna, an interface to a cellular module and a satellite-based receiver providing a synchronization signal to the cellular module. Furthermore, a method for operating said module is suggested.

## Description

The invention relates to a module and to a method for operating said module.

Synchronization of cellular networks, e.g., 2G, 3G, WiMAX, LTE, can be provided via satellite-based clock distribution. Different cellular networks require highly accurate clock signals to supply a high spectral efficiency with clock and phase being synchronized. Existing approaches utilize data provided by a global positioning system (GPS) to meet this demand.

Reliable satellite-based synchronization requires for expensive installations comprising, e.g., satellite-based receiver, cables, outdoor antennas and lightening protection of the installation. The antennas require a line of sights to the satellites in order to receive the required signal. The cellular equipment that needs to be supplied with the synchronization signal may be deployed remote to this installation. Hence, further wiring will be needed to supply the signal to the cellular equipment.

Another disadvantage stems from the fact that outdoor modules need to be identified in order to correctly connect the RF-antenna installation to the correct cellular interface, e.g., to the correct BTS interface.

The **problem** to be solved is to overcome the disadvantages as stated above and in particular to provide an efficient approach to supply synchronization data to cellular modules.

This problem is solved according to the features of the independent claims. Further embodiments result from the depending claims.

In order to overcome this problem, a module is provided comprising
- an active outdoor module;
- an interface to an antenna;
- an interface to a cellular module;
- a satellite-based receiver providing a synchronization signal to the cellular module.

This approach allows processing synchronization data from the satellite-based receiver as well as data from the active outdoor module.

As the module comprises both the active outdoor module and the satellite-based receiver, the latter may advantageously utilize existing wiring and power supply already provided for the active outdoor module. This reduces the cabling effort as well as any mounting effort for an additional device, e.g., a separate GPS receiver.

In an embodiment, the active outdoor module comprises at least one radio frequency module and/or at least one tower-mounted amplifier.

Said amplifier may as well be mounted on any kind of rising, e.g., on a roof, on a wall or the like.

It is noted that said active outdoor module may comprise any unit associated with a cellular service or providing any kind of service for a cellular network like, e.g., 2G, 3G, WiMAX, LTE. This active outdoor module and the satellite-based receiver are advantageously connected to a common cable and/or a common power supply.

In another embodiment, the antenna is arranged to receive a signal for the active outdoor module and a signal for the satellite-based receiver.

Thus, the antenna may be realized as a combined antenna.

In a further embodiment, the antenna is arranged in or associated with said module.

Hence, the antenna can be located adjacent to the module or it may be deployed separately, e.g., at a jutting location. The antenna may also be integrated in the module.

The interface to the antenna may be any means that facilitates connecting the antenna to the module, in particular to the active outdoor module.

In a next embodiment, the cellular module is a system module or a base transceiver station connected via said interface to the module.

It is also an embodiment that the satellite-based receiver is a GPS receiver.

It is noted that any kind of satellite positioning system may be used.

Pursuant to another embodiment, the synchronization signal allows synchronization of a clock and/or a position.

Hence, the clock of at least one cellular module can be synchronized. In addition, the position of the satellite-based receiver is provided towards the cellular module thereby enabling the cellular module to be aware and to utilize its own position (in case the cellular module is located adjacent or, e.g., below, the satellite-based receiver).

According to an embodiment, the module is supplied by a power supply that in particular supplies the antenna and the cellular module.

The problem stated above is also solved by a method for operating a module as described herein.

The problem stated supra is further solved by a communication system comprising the device as described herein.

Embodiments of the invention are shown and illustrated in the following figure:

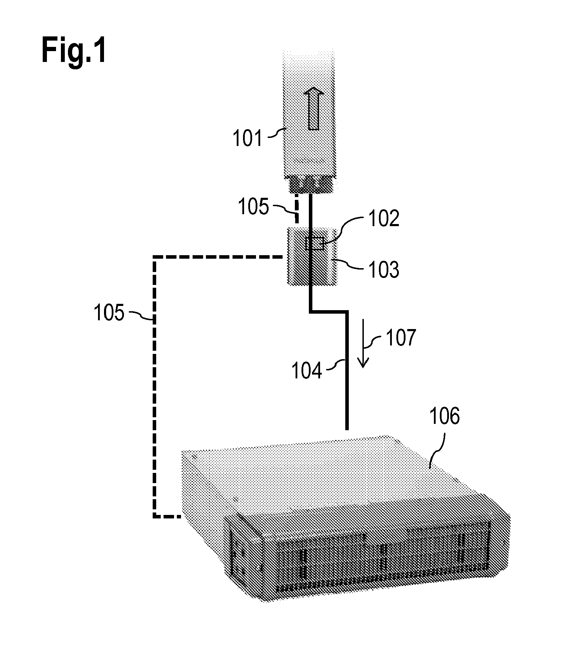

- Fig.1: shows an exemplary scenario to synchronize a base transceiver station via a global positioning system signal forwarded by an active outdoor module.

The approach suggests in particular to combine a radiofrequency (RF) head with an GPS receiver in order to allow for a synchronization of a network element (NE), in particular a system module of a cellular network or a base transceiver station (BTS).

**Fig.1** shows an exemplary scenario to synchronize a BTS 106 via GPS-signals forwarded by an active outdoor module 103.

The active outdoor module 103 (also referred to as radio/frequency (RF) head) comprises an integrated GPS receiver 102. The active outdoor module 103 is connected to a combined RF and GPS antenna 101. The GPS receiver 102 obtains a GPS signal that can be used for synchronization purposes regarding a clock and a location. The synchronization signal is conveyed via a common cable 107 towards the BTS 106. Advantageously, the common cable 107 connects the BTS 106 with the active outdoor module 103 and further the active outdoor module 103 with the antenna 101. A power supply 105 is connected to the BTS 106, to the active outdoor module 103 and to the antenna 101.

The active outdoor module 103 and the antenna 101 may be deployed as one module or unit or they may be located adjacent to one another.

The GPS receiver 102 may be any satellite-based receiver to receive and/or process signals that can be utilized for synchronization purposes. The GPS receiver 102 can be used to identify the location and/or the relative position of the outdoor module.

Instead of the BTS 106 any cellular NE can be deployed and connected according to the arrangement depicted in Fig.1. The NE is thus preferably enabled to synchronize its own clock with a signal that it obtains or receives from the active outdoor module 103.

The active outdoor module 103 may comprise or may have attached the GPS receiver 102 which decodes the synchronization signal from the satellite signal received via said antenna 101. Advantageously, the GPS receiver 102 could reuse existing cables (104, 105).

It is noted that several such active outdoor modules 103 can be connected to one BTS 106 or to any such base station module of a cellular network, said BTS (module) being deployed indoor or outdoor. The several active outdoor modules may be associated with or deployed as tower-mounted amplifiers (TMAs).

Advantageously, this approach allows significantly reducing installation efforts. Additional cables can be dropped. The approach further allows for an increased reliability due to its optional utilization of multiple receivers in different outdoor modules. In addition, an outdoor module identification is less error prone. It is further an advantage that no separate satellite-based receivers need to be supplied. Hence, the integrated solution requires less material and/or reduces the amount of cost regarding logistic efforts.

### List of Abbreviations:

- 2G: 2nd Generation Cellular Network
- 3G: 3rd Generation Cellular Network
- BB: Base Band
- BTS: Base Transceiver Station
- GPS: Global Positioning System
- LTE: Long Term Evolution
- NE: Network Element
- RF: Radio Frequency
- TMA: Tower-Mounted Amplifier

## Claims

1. A module comprising
- an active outdoor module;
- an interface to an antenna;
- an interface to a cellular module;
- a satellite-based receiver providing a synchronization signal to the cellular module.

2. The module according to claim 1, wherein the active outdoor module comprises at least one radio frequency module and/or at least one tower-mounted amplifier.

3. The module according to any of the preceding claims, wherein the antenna arranged to receive a signal for the active outdoor module and a signal for the satellite-based receiver.

4. The module according to any of the preceding claims, wherein the antenna is arranged in or associated with said module.

5. The module according to any of the preceding claims, wherein the cellular module is a system module or a base transceiver station connected via said interface to the module.

6. The module according to any of the preceding claims, wherein the satellite-based receiver is a GPS receiver.

7. The module according to any of the preceding claims, wherein the synchronization signal allows synchronization of a clock and/or a position.

8. The module according to any of the preceding claims, wherein the module is supplied by a power supply that in particular supplies the antenna and the cellular module.

9. A method for operating a module according to any of the preceding claims.
